# DEMANDE DE BREVET EUROPEEN

(11) **EP 2 246 105 A1**
(43) Date de publication de la demande: **03.11.2010**
(21) Numéro de dépôt: 10160510.3
(22) Date de dépôt: 20.04.2010
(51) Int. Cl.: B01D 17/00, E03F 5/14, E03F 5/16

(54) **Séparateur à hydrocarbures destiné au traitement d'eaux de ruissellement.**

(30) Priorité: 24.04.2009 FR 0902002
(71) Demandeur: Societe Eudoise d'Environnement et de Separation, 76260 Etalondes (FR)
(72) Inventeur: Le Prince, Guy, 76260 Eu (FR)
(74) Mandataire: Jaunez, Xavier

(57) **Abrégé**

L'invention a pour objet un séparateur à hydrocarbures destiné au traitement d'eaux de ruissellement, qui comprend un caisson principal présentant au moins un trou d'homme (20, 27), un dispositif de by-pass (1) comprenant une conduite principale (2) raccordée audit caisson principal, ladite conduite comportant deux extrémités (3,4) en vis-à-vis définissant une entrée et une sortie dudit dispositif de by-pass destinées à constituer l'entrée et la sortie du séparateur, ainsi qu'une paroi supérieure et des parois latérales, et une paroi inférieure présentant deux orifices reliés respectivement au compartiment débourbeur (18) et au compartiment séparateur (19) ;

Conformément à l'invention, le dispositif de by-pass (1) comprend également un accès (14) sous forme d'une ouverture ménagée dans une paroi de la conduite principale (2) et permettant un accès direct par l'espace intérieur du caisson principal à l'espace intérieur du dispositif de by-pass.

## Description

### DOMAINE DE L'INVENTION

La présente invention est du domaine du traitement des eaux pluviales ou industrielles, et a plus particulièrement pour objet un perfectionnement aux séparateurs à hydrocarbures destinés au traitement d'eaux de ruissellement.

### ARRIERE-PLAN DE L'INVENTION

Sur toutes les zones de circulation de véhicules (parkings, voiries, aires de lavage, aires de dépotage, stations service, etc...), les eaux de ruissellement apparaissant en cas de pluies ou de nettoyage renferment une quantité plus ou moins importante d'hydrocarbures, de boues et de diverses matières solides en suspension qu'il est nécessaire d'éliminer avant le rejet en milieu naturel ou en station d'épuration.

On a déjà proposé de nombreux séparateurs à hydrocarbures qui sont du type à compartiment débourbeur et compartiment séparateur, ces deux compartiments étant montés en série, de façon que les eaux de ruissellement ayant pénétré dans le séparateur en ressortent dans un état débourbé, et débarrassées des hydrocarbures vers une canalisation de sortie.

En cas d'orages ou de fortes pluies, la situation se complique dans la mesure où des volumes d'eaux de ruissellement avec des débits très importants sont introduits dans le séparateur, lesquels débits d'eaux ne peuvent la plupart du temps être intégralement débarrassés des hydrocarbures qu'ils contiennent. Pour faire face à cette difficulté, on a développé il y a une vingtaine d'années des dispositifs de déviation de flux intégrés aux séparateurs à hydrocarbures, en général appelés dispositifs de by-pass ou déversoirs d'orage. La fonction d'un tel dispositif de by-pass est de recueillir les eaux lors d'une augmentation de débit, ainsi que les eaux n'accédant plus dans le compartiment séparateur lorsque celui-ci est saturé, et de renvoyer directement vers la sortie le flux qui est supérieur à la capacité de traitement du séparateur.

En effet, les compartiments séparateurs sont classiquement pourvus d'un système d'obturation automatique, en général à flotteur, qui, en cas de saturation et/ou d'accumulation d'hydrocarbures, vient fermer progressivement la sortie du compartiment séparateur, l'intégralité des eaux en entrée de l'appareil étant alors évacuée directement par le dispositif de by-pass. De façon plus générale, on considère que, sur les zones où la pollution est réputée faible (zones de roulement, parkings, zones de stationnement imperméabilisées), les hydrocarbures sont drainés par les premières eaux d'un élément pluvial. Si la pluviométrie devient très importante, on peut considérer que les surfaces concernées sont déjà débarrassées de la majorité des hydrocarbures légers, et tolérer que le flux plus important traverse le dispositif de by-pass ou déversoir d'orage sans être détourné dans le séparateur proprement dit.

Les séparateurs, par ailleurs, doivent pouvoir être inspectés, notamment à des fins de nettoyage, régulièrement. C'est la raison pour laquelle les installations prévoient des accès appelés trous d'homme à cet effet. Ces trous d'homme sont également utiles, le cas échéant, lors du montage des installations, car ils permettent d'introduire dans les différents compartiments, généralement définis par des cuves fabriquées par moulage de matériaux polymères, des éléments permettant de les fonctionnaliser, comme des filtres, des moyens de raccordement et d'étanchéité, des grilles etc ...

Le document US 6 077 448 A décrit un séparateur à by-pass constitué par une simple canalisation intérieure traversant les parois d'extrémité du caisson du séparateur. Les seules ouvertures permettant un accès direct entre les espaces intérieurs du caisson et du by-pass sont de simples ouvertures ménagées dans la paroi inférieure de la canalisation formant le by-pass, lesquelles ouvertures sont exclusivement réservées à l'écoulement des eaux à traiter, hormis en période d'orage, en entrant dans une première chambre et en ressortant par une troisième chambre.

Le document US 2005/103698 A1 décrit un séparateur à by-pass déporté latéralement par rapport aux compartiments de traitement des eaux, avec donc des orifices, reliés de manière étanche auxdits compartiments, qui sont ménagés dans les parois latérales du by-pass. De façon classique, l'accès à l'intérieur du by-pass est prévu par une ouverture d'accès sous forme de trappe disposée en partie supérieure du by-pass.

Le document AT 357 114 B illustre l'arrière plan technologique pour une application qui ne concerne pas le domaine des séparateurs, mais une simple canalisation d'évacuation des eaux usées, avec un accès, de l'extérieur vers l'intérieur, prévu sous forme d'une ouverture pratiquée en partie supérieure de ladite canalisation.

Il est par ailleurs connu du document EP 2 020 465 A1 de la demanderesse un séparateur muni d'un dispositif de by-pass dont la cloison supérieure est munie d'un trou d'homme autorisant un accès direct à l'espace intérieur du caisson du séparateur, solution présentant l'avantage de ne recourir qu'à un trou d'homme unique pour l'accès et la surveillance de la totalité du dispositif de by-pass, de sorte qu'un seul regard associé est nécessaire en surface.

Cependant, cette solution est susceptible d'amélioration, notamment afin de conférer plus de flexibilité à l'ensemble de l'installation selon qu'elle comprend une unique cuve séparée en compartiments, ou une juxtaposition de cuves distinctes, et selon son mode de fonctionnement. Elle est aussi susceptible d'amélioration en termes de compacité de l'ensemble de l'installation, et de simplification en termes de fabrication, en particulier par moulage.

### BUT DE L'INVENTION

La présente invention a pour objet de proposer un séparateur à hydrocarbures alternatif à celui décrit plus haut, permettant de favorisant à la fois la mise en place et l'inspection en service, et/ou permettant d'exploiter au mieux la modularité de l'installation.

L'invention a également pour objet de proposer un séparateur à hydrocarbures équipé d'un dispositif de by-pass dont l'implantation est améliorée et/ou dont l'implantation optimise le volume global de l'installation.

### OBJET DE L'INVENTION

L'invention a tout d'abord pour objet un séparateur à hydrocarbures destiné au traitement d'eaux de ruissellement, comportant un compartiment débourbeur et un compartiment séparateur, ledit séparateur comprenant :
- un caisson principal, ledit caisson principal présentant en partie supérieure au moins un trou d'homme permettant de relier l'extérieur à l'espace intérieur du caisson ;
- un dispositif de by-pass comprenant une conduite principale raccordée audit caisson principal, ladite conduite comportant :
- deux extrémités en vis-à-vis définissant une entrée et une sortie dudit dispositif de by-pass destinées à constituer l'entrée et la sortie du séparateur;
- une paroi supérieure et des parois latérales;
   et
- une paroi inférieure présentant deux orifices reliés de façon étanche respectivement à un orifice d'entrée du compartiment débourbeur et à un orifice de sortie du compartiment séparateur.

Selon l'invention, le dispositif de by-pass comprend également un accès sous forme d'une ouverture ménagée dans une des parois latérales de la conduite principale et permettant un accès direct par l'espace intérieur du caisson principal à l'espace intérieur du dispositif de by-pass.

Ainsi, le séparateur selon l'invention permet une inspection de l'installation particulière: le caisson principal prévoit un trou d'homme reliant l'intérieur du caisson à l'extérieur (éventuellement via une conduite enterrée au moins en partie), ce qui permet à un opérateur d'inspecter l'intérieur du caisson en descendant à l'intérieur de celui-ci. L'accès prévu au niveau du dispositif de by-pass lui donne ensuite un accès au moins partiel, mais néanmoins suffisant, à l'espace intérieur du dispositif de by-pass, lui permettant ainsi d'inspecter au moins la zone d'entrée de la conduite principale, c'est-à-dire la zone où il y a des risques d'une accumulation de détritus, branchages etc .. ; nécessitant d'être retirés pour ne pas affecter le fonctionnement du by-pass. Cet accès au niveau du by-pass n'a pas besoin d'avoir la taille d'un trou d'homme classique, à savoir, par exemple, un orifice ayant un diamètre d'environ 80 cm. Il peut remplir son rôle avec un diamètre, quand il est choisi cylindrique, d'environ 15 à au plus 50 cm, ce qui suffit à l'opérateur pour engager le bras à l'intérieur du by-pass et atteindre la zone d'entrée « sensible ».

L'invention, en supprimant le trou d'homme du dispositif de by-pass, permet d'en simplifier la conception, et de le rendre plus compact sans en diminuer la fonctionnalité, au prix d'un ajout d'un accès latéral plus modeste en taille.

De préférence, l'accès du dispositif de by-pass permet un accès direct depuis le compartiment séparateur à l'espace intérieur dudit dispositif de by-pass. En effet, dans un mode de réalisation qui sera décrit en détails plus loin, le dispositif de by-pass se trouve
au moins en partie supporté par la partie du caisson définissant le compartiment séparateur, il est donc plus facile de prévoir un accès du by-pass en direction de ce compartiment spécifique.

De préférence, l'accès du dispositif de by-pass est muni d'un moyen d'obturation du type bouchon amovible ou clapet. Il doit permettre une ouverture facile par l'opérateur qui se trouve dans le caisson, tout en garantissant, en dehors des visites d'inspection, une étanchéité suffisante pour éviter toute remontée de liquide dans le by-pass en dehors des voies prévues à cet effet.

De préférence, le dispositif de by-pass comprend un appendice qui traverse de façon étanche la paroi d'un des compartiments du caisson principal, notamment celle du compartiment séparateur. Cet appendice peut prendre la forme d'une conduite courte, tronquée disposée sur l'accès pratiqué dans la conduite principale. Les moyens d'obturation mentionnés plus haut peuvent être alors disposés soit au niveau de l'accès lui-même, soit au niveau de l'appendice, pour boucher cette conduite tronquée.

De préférence, cet appendice est venu de matière avec la conduite principale ou est rapporté sur la conduite principale. Il est plus avantageux que l'appendice soit venu de matière, afin d'éviter d'avoir à raccorder les deux parties, et de pouvoir mouler l'ensemble d'une seule pièce.

De préférence, la conduite principale du dispositif de by-pass a une forme substantiellement cylindrique. C'est une forme particulièrement simple, notamment à mouler, une forme qui favorise particulièrement l'écoulement de fluides, et une forme compacte qui est rendue possible par la suppression du trou d'homme, qui, précédemment, conduisait à avoir une paroi supérieure de by-pass présentant une face plane et de taille minimale imposée par celle du trou d'homme à y pratiquer.

De préférence, l'entrée et la sortie de la conduite principale du dispositif de by-pass sont des ouvertures, de préférence substantiellement cylindriques, qui sont décentrées en hauteur l'une par rapport à l'autre. Un tel agencement a pour effet de favoriser l'écoulement en créant une pente descendante de l'entrée vers la sortie de la conduite. La paroi inférieure de la conduite peut, par contre, être sensiblement horizontale, sans être inclinée ni avoir à présenter des marches.

Avantageusement, et comme déjà évoqué, la paroi supérieure de la conduite principale du dispositif de by-pass selon l'invention est dépourvue d'ouverture, notamment de type trou d'homme. On peut donc enterrer tout le dispositif de by-pass, avec seulement des raccordements à chacune des extrémités de la conduite principale.

De préférence, au moins un des deux orifices de la paroi inférieure de la conduite principale du dispositif de by-pass, de préférence les deux orifices, est prolongé par une conduite secondaire débouchant, de préférence de manière étanche, dans un compartiment du caisson. On prévoit avantageusement que ces conduites soient venues de matière avec la conduite principale pour éviter tout raccordement, et pouvoir mouler l'ensemble en une seule pièce.

De préférence, la conduite principale du dispositif de by-pass est munie d'un talus transversal formant surverse, les deux orifices de la partie inférieure de ladite conduite étant situés de part et d'autre dudit talus transversal, et l'accès étant disposé d'un côté ou de l'autre dudit talus.

De préférence, l'accès du dispositif de by-pass est disposé du côté entrée de la conduite principale, ladite entrée pouvant être équipée d'un dégrilleur surmontant l'orifice associé de la paroi inférieure de ladite conduite principale.

Grâce au dégrilleur, les éventuels objets solides, au dessus d'une taille prédéterminée, sont retenus et ne pénètrent pas dans le compartiment débourbeur du séparateur, et ces objets sont en plus repoussés par le flux des eaux rentrantes jusqu'à franchir grâce à l'effet de chasse le talus transversal formant surverse et gagner ensuite la sortie du dispositif de by-pass. Il est intéressant de disposer l'accès dans la partie entrée de la conduite principale, notamment au voisinage du dégrilleur quand celui-ci est présent, car c'est cette zone qui est la plus utile à inspecter dans le dispositif de by-pass.

De préférence, l'entrée et la sortie de la conduite principale du dispositif de by-pass sont équipées de moyens d'étanchéité et de moyens de butée axiale agencés pour limiter l'enfoncement des canalisations extérieures respectives de raccordement.

De préférence encore, le dispositif de by-pass présente des nervures de rigidification, au moins sur la conduite principale au voisinage des orifices de sa paroi inférieure.

De préférence alors, le dispositif de by-pass est disposé à l'extérieur du caisson principal, substantiellement dans l'enveloppe tridimensionnelle dudit caisson. On obtient ainsi une installation globalement particulièrement compacte.

De préférence, le dispositif de by-pass est disposé substantiellement dans l'espace défini supérieurement entre les parties correspondant au compartiment débourbeur et au compartiment séparateur. La forme géométrique simple, notamment de type fût cylindrique, de la conduite principale du dispositif de by-pass rend son implantation particulièrement aisée dans cet espace.

Dans un mode d'exécution particulier, le caisson principal du séparateur est en deux parties distinctes juxtaposées respectivement associées aux deux compartiments dudit caisson, et alors le dispositif de by-pass est majoritairement, notamment essentiellement, en appui sur la seule partie correspondant au compartiment séparateur.

Cette configuration est avantageuse à plusieurs titres. D'une part, le compartiment séparateur est usuellement de taille nettement plus réduite que le compartiment débourbeur, ses dimensions étant donc plus proches de celle du dispositif de by-pass, notamment de la longueur de sa conduite principale : on peut disposer la conduite principale sur une zone d'appui ménagée le long de la partie définissant le compartiment séparateur. D'autre part, on peut ainsi rendre l'installation plus modulable : le compartiment débourbeur peut en effet être utilisé indépendamment du dispositif de by-pass supporté par la partie définissant l'autre compartiment, ou non, selon les besoins et l'utilisation desdits compartiments (on peut en effet envisager d'utiliser le compartiment dit débourbeur ou le compartiment dit séparateur pour des fonctions différentes de celles prévues).

Les compartiments séparateur et débourbeur peuvent être définis par une cuve commune, ou par deux cuves fabriquées séparément puis raccordées. Le dispositif de by-pass est de préférence moulé à part, en un seul tenant.

D'autres caractéristiques et avantages de l'invention apparaîtront plus clairement à la lumière de la description qui va suivre et des dessins annexés, illustrant un mode de réalisation particulier.

### BREVE DESCRIPTION DES DESSINS

Il sera fait référence aux figures des dessins annexés, où :
- les figures 1 et 2 illustrent selon deux perspectives différentes le dispositif de by-pass d'une installation de séparateur d'hydrocarbures selon l'invention, l'orifice d'extrémité visible en figure 1 étant représenté en figure 2 dans son état antérieur au désoperculage effectué,
- la figure 3 illustre le dispositif de by-pass des figures 1 et 2 précédentes selon une section verticale,
- la figure 4 est une vue en éclaté de l'ensemble du séparateur selon l'invention, comprenant le dispositif de by-pass tel que représenté en figure 1,
- la figure 5 est une vue du séparateur selon l'invention selon une coupe verticale passant par la conduite secondaire du dispositif de by-pass vers le compartiment débourbeur,
- les figures 6 et 7 sont des coupes selon des plans verticaux du séparateur selon l'invention, passant respectivement au niveau de la rampe faisant jonction entre les deux cuves et du flotteur du compartiment séparateur,
- la figure 8 est une vue en perspective du séparateur selon l'invention, avec son dispositif de by-pass.

L'ensemble des figures est schématique et ne respecte pas nécessairement l'échelle pour en faciliter la lecture, chaque élément représenté conservant la même référence dans l'ensemble des figures.

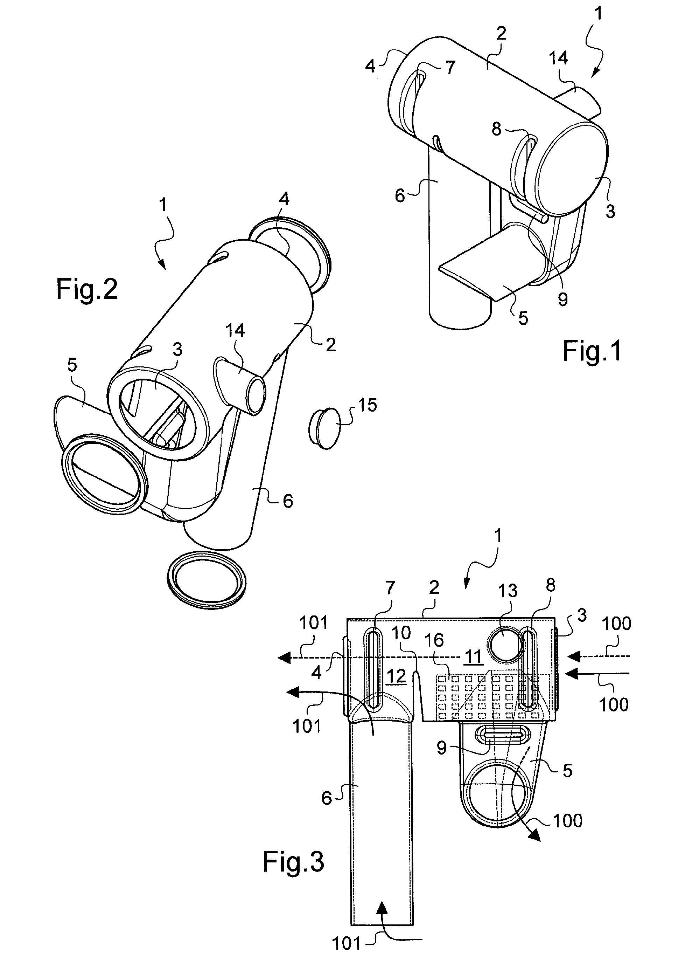

Les figures 1,2 et 3 se rapportent au dispositif de by-pass 1. Il est fabriqué en polyéthylène par rotomoulage en une pièce. Alternativement, il peut être fabriqué en plusieurs parties, qu'il serait nécessaire de raccorder ensuite.

Il comporte une conduite principale 2 sensiblement cylindrique, avec une extrémité d'entrée 3 et une extrémité de sortie 4. Ces ouvertures sont formées par désoperculage des cloisons latérales de la conduite :
la figure 1 représente la conduite principale 2 encore fermée, et la figure 2 la représente une fois ses extrémités désoperculées. Ces entrée et sortie 3,4 sont substantiellement de forme cylindrique et de tailles similaires ou identiques. Elles sont en vis-à-vis, mais de préférence légèrement décentrées l'une par rapport à l'autre en hauteur, en considérant le dispositif de by-pass dans sa configuration de montage dans l'installation, comme représenté en figure 3. Elles sont munies de joints d'étanchéité non représentés à ces figures. A l'intérieur de la conduite, à proximité des entrée 5 et sortie 6, on prévoit des butées axiales non représentées, qui permettent de contrôler/limiter l'enfoncement des canalisations extérieures respectives de raccordement.

Par commodité, on décomposera dans la présente demande les parois de la conduite principale en parois supérieure, inférieure et latérales, bien que se rapportant, dans cet exemple non limitatif, à une conduite de section cylindrique : ces termes sont à comprendre selon la configuration de montage du by-pass, tel que représenté en figure 3, la paroi inférieure étant la zone de la paroi qui porte les orifices d'accès aux compartiments de l'installation.

La section de la conduite principale 2 peut aussi avoir une section non cylindrique, ovale ou rectangulaire par exemple.

Cette conduite principale 2 est munie en partie inférieure de deux conduites secondaires : la conduite 5, qui est une conduite coudée, ici à angle droit, destinée à raccorder la conduite principale 2 au compartiment débourbeur du séparateur, et la conduite 6, rectiligne, destinée à raccorder la conduite principale 2 au compartiment séparateur. L'orifice de sortie de la conduite 6 est de préférence obtenu par désoperculage de la cloison de cette conduite, il en est de même pour l'orifice de sortie de l'autre conduite secondaire 5.

La conduite principale 2 et au moins la conduite secondaire coudée 5 sont pourvues de nervures de rigidification 7, 8, 9. Les nervures de rigidification 7,8 de la conduite principale se situent dans ses parois latérales, à proximité des conduites secondaires. La nervure de rigidification 9 de la conduite secondaire 5 se situe au voisinage de sa zone de raccordement avec la conduite principale 1. D'autres nervures, non représentées, peuvent naturellement être prévues.

La paroi inférieure de la conduite principale 2 présente un seuil 10 qui définit à l'intérieur de celle-ci un talus transversal formant surverse, qui réduit localement de moitié environ la section de la conduite 2, et qui partage la conduite en deux parties, une partie « amont » 11 et une partie « aval » 12, comme schématisé par les flèches en traits pleins 100, 101 représentant le sens d'écoulement. Alternativement, la paroi inférieure de la conduite peut garder sa forme cylindrique, et le talus peut être une pièce rapportée à l'intérieur de la conduite. La conduite principale comprend également un dégrilleur 16 agencé au niveau de sa partie « amont » 11. Ce dégrilleur 16 est ici constitué par un cadre équipé de barres parallèles dont l'écartement respectif correspond au dimensionnement des obstacles solides à retenir afin d'en barrer l'accès au compartiment débourbeur du séparateur. Ce dégrilleur 16 surmonte la conduite secondaire 5, de façon à ce que l'ensemble du fluide entrant dans la conduite principale soit contraint de le traverser avant de descendre dans la conduite secondaire 5.

La paroi supérieure de la conduite principale 2 est quant à elle dépourvue d'ouverture.

Conformément à la caractéristique de l'invention, la conduite principale 2 présente également en paroi latérale un accès 13, qui comporte une ouverture sensiblement circulaire ménagée dans la paroi, accès qui se prolonge en une courte conduite cylindrique 14 munie d'un bouchon amovible 15. Cet accès 13 et cette conduite 14 présentent un diamètre d'environ 20 cm. La sortie de la partie amont 11 de la conduite 2 est destinée à déboucher dans le compartiment séparateur de l'installation, grâce à la forme coudée de la conduite secondaire 5. L'accès 13 se situe en l'espèce dans la partie « amont » 11 de la conduite principale, au dessus du dégrilleur 16 et à proximité de la conduite secondaire coudée 5 : elle se situe à substantiellement la même distance de l'entrée 3 de la conduite 2 que la conduite secondaire 5.

Les flèches en traits pleins 100, 101 représentées à la figure 3 montrent le cheminement du fluide dans le by-pass en fonctionnement normal : le fluide chargé, à savoir l'eau chargée d'hydrocarbures, de boues et déchets divers éventuels, entre dans la partie « amont » 11 de la conduite principale 2 par l'entrée 3 raccordée à une canalisation extérieure non représentée. Le fluide passe à travers le dégrilleur 16 de façon à se décharger des déchets solides de taille supérieure à l'écartement des barres du dégrilleur, puis descend par la canalisation secondaire coudée 5 vers le compartiment débourbeur. Par la suite (le détail du cheminement du fluide dans le reste de l'installation sera décrit plus loin), le fluide débarrassé de l'essentiel des boues, hydrocarbures et déchets solides, remonte par la conduite secondaire droite 6 dans la partie « aval » 12 de la conduite principale, pour ressortir par la sortie 4 vers une canalisation extérieure d'évacuation non représentée. Le fait que les entrée et sortie 3, 4 soient décentrées en hauteur crée une perte de charge suffisante pour garantir l'écoulement voulu du fluide dans la conduite principale 2.

Les flèches en pointillés 100,101 indiquent le cheminement du fluide en cas d'orage entrainant un afflux d'eau supérieur à ce que peut traiter l'installation : le fluide entre par l'entrée 3, passe au dessus du talus 10 pour ressortir directement par la sortie 4 (il est aussi possible, dans ce mode de fonctionnement du type orage, que, parallèlement, une partie du fluide suive le cheminement normal décrit plus haut).

L'accès 13 et sa conduite associée 14 permettent à un opérateur qui se trouve déjà dans le compartiment séparateur de l'installation, de retirer le bouchon 15 et d'inspecter avec un bras au moins la zone « amont » 11 de la conduite principale 2 au voisinage du dégrilleur 16.

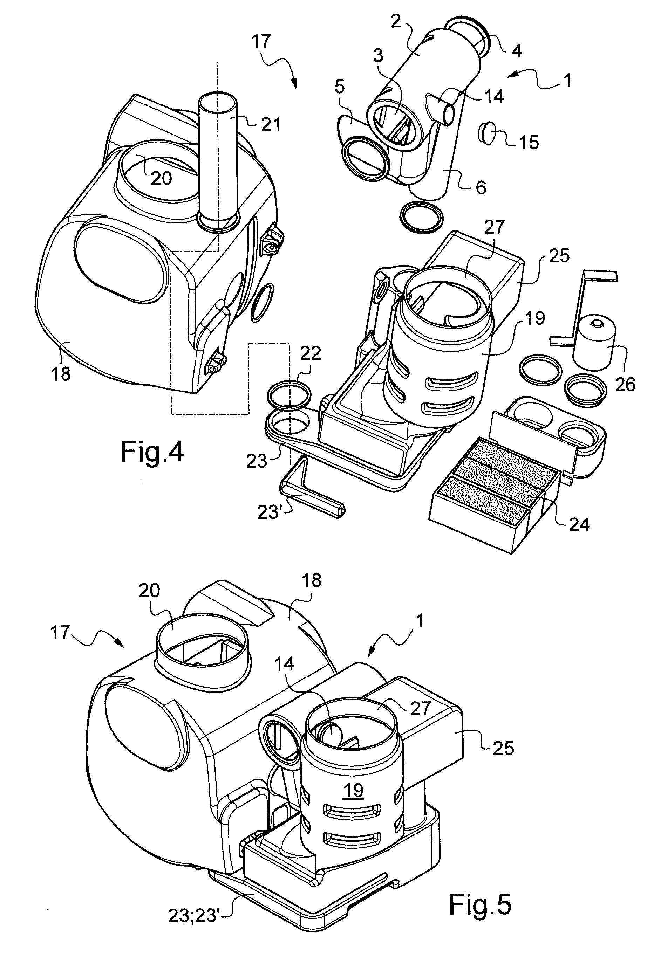

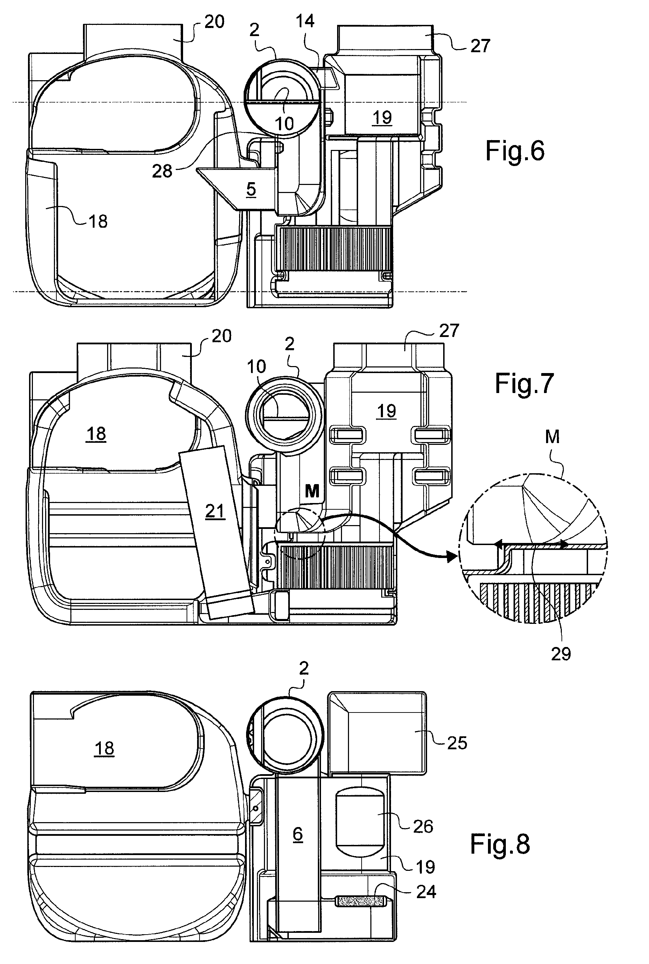

Les figures 4 à 8 représentent maintenant l'ensemble du séparateur 17, sous forme éclatée (figure 4), en perspective (figure 8), et selon plusieurs coupes verticales (figures 5, 6, 7). On retrouve à la figure 4 le dispositif de by-pass 1 représenté selon la figure 1, les mêmes références le concernant étant conservées dans l'ensemble des figures. Elles montrent une cuve 18 délimitant le compartiment débourbeur et une cuve 19 délimitant le compartiment séparateur, ces cuves étant ici distinctes et juxtaposées l'une contre l'autre.

Dans la suite de l'exposé, et par soucis de concision, on désignera par compartiment 18 la cuve délimitant le compartiment débourbeur, et par compartiment 19 la cuve délimitant le compartiment séparateur.

Les cuves 18 et 19 peuvent, comme le by-pass 1, être fabriquées par moulage, notamment rotomoulage de polymère comme du polyéthylène.

La conception et le fonctionnement de ces deux cuves qui sont connus en soit ne seront pas repris en détails ici. Pour davantage de précision, on pourra avantageusement se reporter, notamment, au document EP 2 020 465 A1 précité.

La cuve 18 est beaucoup plus grande que la cuve 19. C'est celle dans laquelle la conduite secondaire 5 du by-pass 1 débouche de façon étanche, et celle dans laquelle les boues dont est chargé le fluide à traiter décantent. La cuve 18 est munie en partie supérieure d'un accès sous forme d'un trou d'homme 20, se prolongeant en une courte conduite vers l'extérieur, qui est prévue pour être fermée par un moyen d'obturation amovible connu et non représenté. Le fluide surnageant est collecté par une conduite intérieure 21 en partie haute de celle-ci. Le positionnement final, sensiblement vertical, de cette conduite 21 à l'intérieur du compartiment 18 est indiqué en figure 4 à l'aide d'une ligne en traits discontinus, et est représenté en position de montage en figure 6. Cette conduite 21 est munie d'un joint d'étanchéité 22 et débouche en partie basse dans une rampe 23, 23' en deux parties, qui va transférer le fluide débourbé vers la cuve 19. Cette rampe permet de diffuser le plus régulièrement possible les hydrocarbures en direction du filtre de coalescence 24 du compartiment séparateur 19. Ce filtre, de façon connue, est fixé aux parois intérieures du compartiment séparateur, par exemple par un système de rainurage dans lequel on peut insérer un ou plusieurs cadres munis du matériau de filtrage. Au passage du filtre, les hydrocarbures contenus dans le fluide coalescent et remontent à la surface : ils sont collectés et évacués dans un bac de rétention d'hydrocarbures 25 pour traitement. Le fluide pénètre dans un flotteur 26 constituant un obturateur automatique, ledit flotteur étant guidé par des barreaux verticaux non représentés et étant agencé pour flotter dans l'eau et couler dans les hydrocarbures (dont la densité est généralement comprise entre 0,85 et 0,95). Par suite, plus la couche d'hydrocarbures collectée augmente, plus le flotteur descend, jusqu'à ce qu'il obstrue la sortie du compartiment séparateur 25 quand la couche a atteint son niveau maximal tolérable.

Le fluide débarrassé de ses hydrocarbures remonte donc dans le dispositif de by-pass 1 par la conduite secondaire 6 pour être évacué par la sortie 4 de la conduite principale 2.

Le compartiment séparateur 19 est aussi muni d'un trou d'homme 27, de conception analogue à celle du trou d'homme 20 du compartiment débourbeur 18. On voit bien, à la figure 8 notamment, qu'un opérateur, par le trou d'homme 27, peut entrer dans le compartiment 19, et de là, atteindre l'accès 13 du by-pass pour l'inspection de celui-ci.

Dans un autre mode de réalisation, on peut prévoir que l'accès au by-pass se fasse par le compartiment débourbeur. Dans ce cas, il faut prévoir de pratiquer l'accès 13 du by-pass dans la paroi latérale de la conduite principale 2 opposée à celle représentée aux figures.

Il est aussi possible de n'avoir qu'un seul trou d'homme, sur l'une ou l'autre des parties correspondant aux compartiments 18 et 19.

En ce qui concerne la conception de l'installation dans son ensemble, il est à noter que le dispositif de by-pass 1, comme cela est bien visible, notamment, de la figure 8 et des figures 6 et 7, se loge tout entier dans le volume disponible entre les deux cuves définissant les compartiments 18 et 19. La conduite principale 2 du by-pass 1 a une longueur sensiblement égale, ici, à celle du compartiment 19 prolongé par le bac 25, et elle ne dépasse pas, en hauteur, le sommet des deux cuves. L'installation est donc particulièrement compacte, ce qui en facilite l'enfouissement sous terre.

Par ailleurs, le dispositif de by-pass 1, dans cette configuration, se trouve porté par la cuve du compartiment séparateur 19 : comme on peut le voir, notamment, sur les figures 5 et 6, le compartiment 19 présente en partie supérieure un ressaut qui offre ainsi une première zone d'appui 28 pour la conduite principale 2 du by-pass 1. Une autre zone d'appui 29 est aussi prévue sur cette cuve, comme représentée notamment en figure 5, pour soutenir en partie basse la conduite coudée 5 du by-pass 1. Un agrandissement séparé M de cette zone d'appui est également représenté à la figure 6.

La conduite principale 2 peut être également soutenue, de façon moins importante, par l'autre cuve définissant le compartiment débourbeur 19, par l'intermédiaire de sa conduite secondaire 6 venant s'appuyer sur celle-ci dans sa zone de raccordement. La cuve 19, et, dans une moindre mesure, la cuve 18, soutiennent ainsi le by-pass.

Il n'est donc pas nécessaire de prévoir des moyens supplémentaires de soutien mécanique du dispositif de by-pass, ce qui est également très avantageux.

Alternativement, on pourrait prévoir des zones d'appui au niveau de la cuve définissant le débourbeur 18, de façon à ce que le by-pass repose sur cette cuve-là plutôt que sur la cuve du séparateur.

Il est à noter que, aussi bien les deux cuves que le by-pass sont enterrés, et n'ont pas à subir d'efforts importants, dans la mesure où l'installation est, de façon connue, surmontée d'une dalle de répartition (non représentée).

## Revendications

1. Séparateur à hydrocarbures destiné au traitement d'eaux de ruissellement, comportant un compartiment débourbeur (18) et un compartiment séparateur (19), ledit séparateur comprenant :
- un caisson principal, ledit caisson principal présentant en partie supérieure au moins un trou d'homme (20,27) permettant de relier l'extérieur à l'espace intérieur du caisson ;
- un dispositif de by-pass (1) comprenant une conduite principale (2) raccordée audit caisson principal, ladite conduite comportant :
- deux extrémités (3,4) en vis-à-vis définissant une entrée et une sortie dudit dispositif de by-pass destinées à constituer l'entrée et la sortie du séparateur;
- une paroi supérieure et des parois latérales;
et
- une paroi inférieure présentant deux orifices reliés de façon étanche respectivement à un orifice d'entrée du compartiment débourbeur (18) et à un orifice de sortie du compartiment séparateur (19);
**caractérisé en ce que** le dispositif de by-pass (1) comprend également un accès (13) sous forme d'une ouverture ménagée dans une des parois latérales de la conduite principale (2) et permettant un accès direct par l'espace intérieur du caisson principal à l'espace intérieur du dispositif de by-pass.

2. Séparateur selon la revendication précédente, **caractérisé en ce que** l'accès (13) du dispositif de by-pass (1) permet un accès direct depuis le compartiment séparateur (19) à l'espace intérieur du dispositif de by-pass.

3. Séparateur selon l'une des revendications précédentes, **caractérisé en ce que** l'accès du dispositif de by-pass (1) est muni d'un moyen d'obturation du type bouchon amovible (15) ou clapet.

4. Séparateur selon l'une des revendications précédentes, **caractérisé en ce que** l'accès (13) du dispositif de by-pass (1) comprend un appendice (14) qui traverse de façon étanche la paroi d'un des compartiments du caisson principal.

5. Séparateur selon la revendication précédente, **caractérisé en ce que** l'appendice (14) est venu de matière avec la conduite principale (2) ou est rapporté sur la conduite principale.

6. Séparateur selon l'une des revendications précédentes, **caractérisé en ce que** la conduite principale (2) du dispositif de by-pass (1) a une forme substantiellement cylindrique.

7. Séparateur selon l'une des revendications précédentes, **caractérisé en ce que** l'entrée (4) et la sortie (5) de la conduite principale (2) du dispositif de by-pass (1) sont des ouvertures, de préférence substantiellement cylindriques, qui sont décentrées en hauteur l'une par rapport à l'autre.

8. Séparateur selon l'une des revendications précédentes, **caractérisé en ce que** la paroi supérieure de la conduite principale (2) du dispositif de by-pass (1) est dépourvue d'ouverture.

9. Séparateur selon l'une des revendications précédentes, **caractérisé en ce qu'**au moins un des deux orifices de la paroi inférieure de la conduite principale du dispositif de by-pass, de préférence les deux orifices, est prolongé par une conduite secondaire(5,6), débouchant de préférence de manière étanche, dans un compartiment (18,19) du caisson.

10. Séparateur selon l'une des revendications précédentes, **caractérisé en ce que** la conduite principale (2) du dispositif de by-pass (1) est munie d'un talus transversal (10) formant surverse, les deux orifices de la partie inférieure de ladite conduite (2) étant situés de part et d'autre dudit talus transversal, et l'accès (13) étant disposé d'un côté ou de l'autre dudit talus.

11. Séparateur selon la revendication précédente, **caractérisé en ce que** l'accès (13) du dispositif de by-pass (1) est disposé du côté entrée (4) de la conduite principale (2), ladite entrée pouvant être équipée d'un dégrilleur (16) surmontant l'orifice associé de la paroi inférieure de ladite conduite principale.

12. Séparateur selon l'une des revendications précédentes, **caractérisé en ce que** l'entrée et la sortie (4,5) de la conduite principale (2) du dispositif de by-pass (1) sont équipées de moyens d'étanchéité et de moyens de butée axiale agencés pour limiter l'enfoncement des canalisations extérieures respectives de raccordement.

13. Séparateur selon l'une des revendications précédentes, **caractérisé en ce que** le dispositif de by-pass (1) présente des nervures de rigidification (7, 8, 9), au moins sur la conduite principale (2) au voisinage des orifices de sa paroi inférieure.

14. Séparateur selon l'une des revendications précédentes, **caractérisé en ce que** le dispositif de by-pass (1) est disposé à l'extérieur du caisson principal, substantiellement dans l'enveloppe tridimensionnelle dudit caisson.

15. Séparateur selon la revendication précédente, **caractérisé en ce que** le dispositif de by-pass (1) est disposé substantiellement dans l'espace défini supérieurement entre les parties correspondant au compartiment débourbeur (18) et au compartiment séparateur (19).

16. Séparateur selon l'une des revendications précédentes, dans lequel le caisson principal est en deux parties distinctes juxtaposées respectivement associées aux deux compartiments (18,19)dudit caisson, **caractérisé en ce que** le dispositif de by-pass (1)est essentiellement en appui sur la seule partie correspondant au compartiment séparateur (19).
